# EUROPEAN PATENT SPECIFICATION

(11) **EP 3 370 582 B1**
(45) Date of publication and mention of the grant of the patent: **10.07.2019**
(21) Application number: 16788541.7
(22) Date of filing: 01.11.2016
(51) Int. Cl.: A47J 31/18, A47J 31/44, A47J 31/46, A47J 31/58, A47J 31/60, A47J 31/02, A47J 31/057

(54) **A COFFEE MACHINE USED WITH A CAPSULE**
KAFFEEMASCHINE ZUR VERWENDUNG MIT EINER KAPSEL
MACHINE À CAFÉ UTILISÉE AVEC UNE CAPSULE

(30) Priority: 06.11.2015 TR 201513931
(43) Date of publication of application: 12.09.2018
(73) Proprietor: Arçelik Anonim Sirketi, 34445 Istanbul (TR)
(72) Inventor: KARAAGAC, Emre, 34950 Istanbul (TR); GUNDUZ, Nihat, 34950 Istanbul (TR); ALPTEKIN, Ahmet, 34950 Istanbul (TR); KARTAL, Resul, 34950 Istanbul (TR); GENCER OZEL, Asli, 34950 Istanbul (TR)
(86) International application number: PCT/EP2016/076271
(87) International publication number: WO 2017/076821

(56) References cited:
- WO-A1-2011/007266
- CA-A1- 2 121 998
- US-A1- 2012 121 768
- US-B1- 6 571 686

## Description

The present invention relates to a coffee machine that is suitable for use with a capsule that comprises single use coffee.

Use of single-use capsules containing coffee in coffee machines is known. In this type of machines, the capsule is placed to a capsule housing that is disposed in the upper portion of the body of the machine, and the coffee in the capsule is transferred to a brewing chamber that is disposed in the lower portion of the capsule housing by being blown/opened. The coffee in the brewing chamber is mixed with water and heated by a heater preferably disposed under the brewing chamber. The brewed coffee can be automatically transferred to a cup or can be transferred by the user to a cup. After the brewing process, the brewing chamber is removed to clean the waste coffee in the brewing chamber. When the user forgets to replace the brewing chamber and attempts to brew coffee, the coffee from the capsule pours on the heater. When the brewing process is carried out in this case, the dry coffee on the heater burns, forming a layer on the heater that is hard to clean and smells bad. Moreover, the burnt coffee may lead to safety vulnerability that may cause even fire.

In the state of the art International Patent Application No. WO2011007266, a coffee machine using capsules is disclosed.

In the state of the art Canadian Patent Application No. CA2121998, a coffee maker especially devised for use in an aircraft is disclosed.

In the state of the art Turkish Patent Application No. TR200100549, a coffee machine using capsules is disclosed.

The aim of the present invention is the realization of a coffee machine that can be operated in a safe manner.

The coffee machine realized in order to attain the aim of the present invention, explicated in the claims comprises a valve that aligns with the capsule housing wherein the capsule is placed by moving when the brewing chamber wherein the coffee is brewed is not in place and that enables the coffee falling from the opened capsule to be transferred to the residue container wherein the liquid that drips from the brewing chamber is accumulated. When the brewing chamber is detached, the valve moves and aligns with the capsule housing at the lower portion of the capsule housing. In this case, when the coffee is desired to be brewed, the coffee that is discharged from the coffee spills on the valve, and the valve enables the coffee to be transferred to the residue container.

In an embodiment of the present invention, in the coffee machine a channel is disposed, one end of which is connected to the lower portion of the valve and the other end opens to the residue container, the channel extending between the channel and the residue container and enabling the coffee falling on the valve to be transferred to the residue container.

In another embodiment of the present invention, when the brewing chamber is replaced, the valve enables the brewing chamber to be aligned with the capsule housing by leaving the alignment with the capsule housing by means of the contact of the brewing chamber. By means of this embodiment of the present invention, when the brewing chamber is replaced, the valve enables the coffee falling from the capsule housing to flow into the brewing chamber.

In another embodiment of the present invention, the valve stays behind the brewing chamber in the direction of the removing the brewing chamber. By means of this embodiment, the valve used for safety purposes is aimed to be positioned so as not to be seen by the user.

In another embodiment of the present invention, when the brewing chamber is replaced, the valve gets into a position that is almost perpendicular to the floor plane by means of the contact of the brewing chamber. In this embodiment, the coffee holding on the valve is enabled to flow into the residue container by means of the gravity effect.

In another embodiment of the present invention, the valve realizes the movement of aligning with the capsule housing by rotating around a pivot pin that houses the valve so that the valve can rotate around the horizontal axis.

In another embodiment of the present invention, when the brewing chamber is removed, the valve rotates by means of the effect of its own weight and aligns with the capsule housing. By means of this embodiment, no additional component is used for the movement of the valve, and the cost advantage is maintained.

In another embodiment of the present invention, the rotating movement of the valve is realized by means of a movement mechanism. In another version of this embodiment, the movement mechanism comprises a spring that is connected to the pivot pin and that constantly tries to align the valve with the capsule housing. In this version, the spring is compressed when the brewing chamber is in place, and when the brewing chamber is removed, the spring rotates the valve and enables the same to be aligned with the capsule housing.

In another embodiment of the present invention, the inside of the channel is coated with a material that prevents the coffee falling into the channel from holding inside the channel and from being stuck inside the channel. Thus, the coffee that is transferred to the channel is fully discharged into the residue container. In another version of this embodiment, the inside of the channel is coated with polytetrafluoroethylene that is known in the state of the art by generating smooth surface.

In the coffee machine of the present invention, dangerous situations that may occur as a result of the distraction or the mistake of the user are prevented by means of the valve that is aligned with the capsule housing as the brewing chamber is removed from its place. Moreover, in this case, all the residues on the coffee machine are accumulated in a single place by transferring the coffee falling from the capsule to the residue container.

The coffee machine realized to attain the aim of the present invention is illustrated in the attached figures, where:

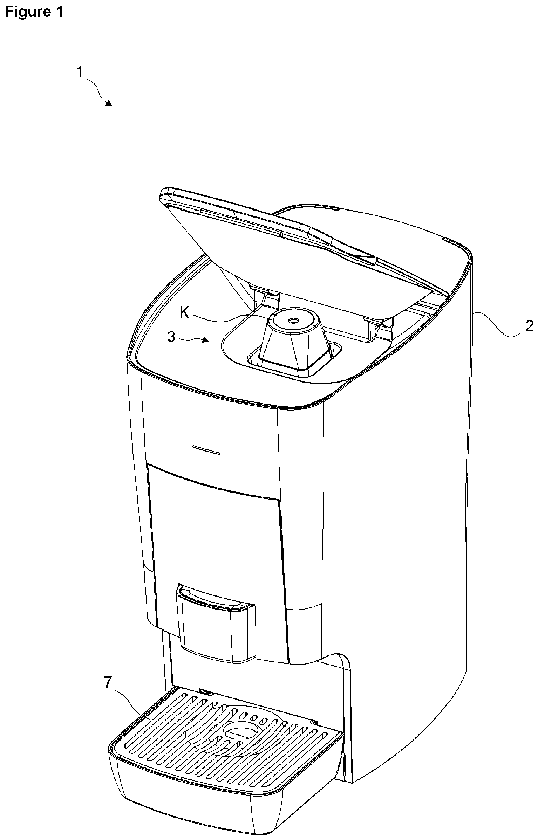

Figure 1 - is the perspective view of a coffee machine.

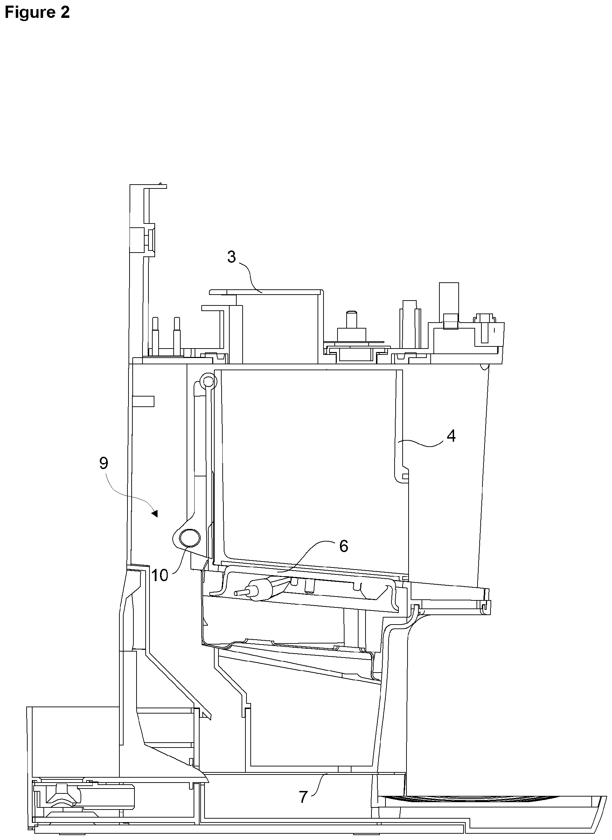

Figure 2 - is the sideways schematic view of the brewing chamber, the valve, and the channel in an embodiment of the present invention.

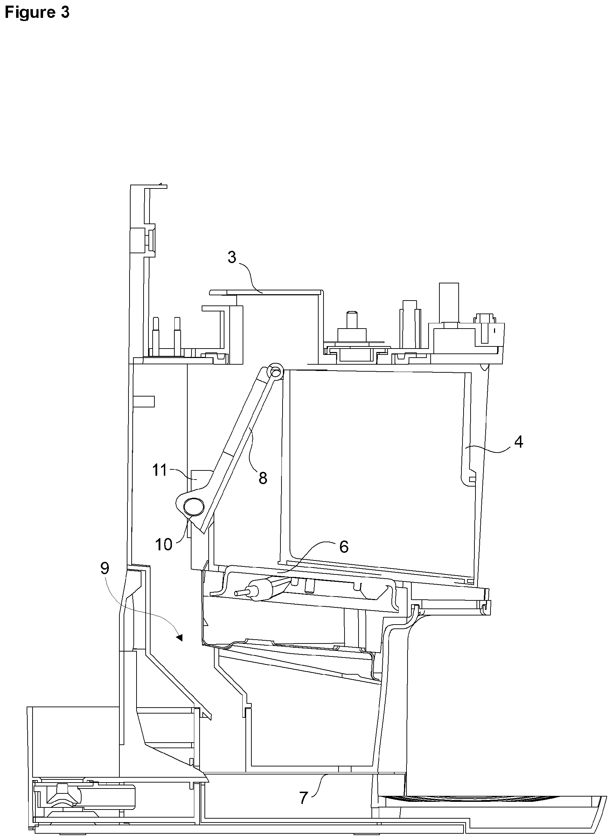

Figure 3 - is the sideways schematic view of the brewing chamber, the valve, and the channel in another embodiment of the present invention.

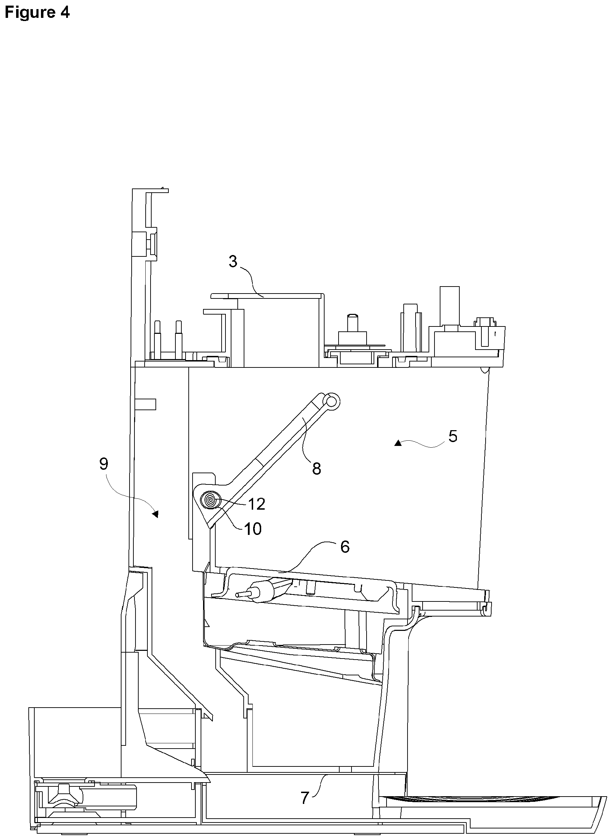

Figure 4 - is the sideways schematic view of the valve and the channel in an embodiment of the present invention.

The elements illustrated in the figures and the steps are numbered as follows:
1. Coffee machine
2. Body
3. Capsule housing
4. Brewing chamber
5. Compartment
6. Heater
7. Residue container
8. Valve
9. Channel
10. Pivot pin
11. Movement mechanism
12. Spring

### K. Capsule

The coffee machine (1) comprises a body (2); a capsule housing (3) wherein the preferably single use capsule (K) is placed and that is disposed at the upper portion of the body (2); a brewing chamber (4) wherein the brewing process is performed by the coffee and the water being added, that is disposed in the body (2) so as to stay under the capsule housing (3) and that can be taken out of the body (2); a compartment (5) wherein the brewing chamber (4) is placed and that is disposed in the body (2); a heater (6) that enables the brewing chamber (4) to be heated, and a residue container (7) wherein the liquid that drips from the brewing chamber (4) is accumulated.

In the coffee machine (1), the coffee is transferred to the brewing chamber (4) placed in the compartment (5) by the user placing the capsule (K) to the capsule housing (3), and the capsule (K) being opened. When the user gives the start brewing command, water is transmitted from the water tank (not shown in the figures) by means of a pump (not shown in the figures) through the water line (not shown in the figures) into the brewing chamber (4) and the heater (6) heats up the brewing chamber (4), thus providing brewing of the coffee. The heater (6) is disposed preferably under the brewing chamber (4) and the heater (6) contacts the brewing chamber (4) only during the brewing process, and the heater (6) has a structure that can preferably move up and down.

The brewing chamber (4) can be taken out of the compartment (5) for reasons such as cleaning, etc. The brewing chamber (4) is taken out by opening a door (not shown in the figures) that is disposed preferably at the front wall of the body (2) and pulling the brewing chamber (4) forward from the compartment (5).

The residue container (7) is disposed preferably at the lowermost portion of the body (2), and is aligned with the brewing chamber (4) in the vertical direction. The liquid that drips from the brewing chamber (4) and/or the liquid that is used in the cleaning of the brewing chamber (4) is accumulated in the residue container (7). When full, the residue container (7) can be emptied by being detached by the user or automatically.

The coffee machine (1) of the present invention comprises a valve (8) that is disposed in the body (2), that aligns with the capsule housing (3) by moving when the brewing chamber (4) is taken out of the compartment (5) and that enables the coffee falling in case the capsule (K) is opened/blown to be guided towards the residue container (7).

In the coffee machine (1) of the present invention, when the brewing chamber (4) is taken out of the compartment (5), the valve (8) moves and aligns with the capsule housing (3) at the lower portion of the capsule housing (3). When the user places the capsule (K) to the capsule housing (3) and desires to brew coffee, the coffee falling from the opened/blown capsule (K) falls on the valve (8), and the valve (8) enables the falling coffee to be directed to the residue container (7). Thus, if the capsule (K) is opened when the brewing chamber (4) is not in the compartment (5), the falling coffee is prevented from falling on the heater (6). Moreover, by directing the falling coffee to the residue container (7), the cleaning process is facilitated.

In an embodiment of the present invention, the coffee machine (1) comprises a channel (9) that is disposed between the valve (8) and the residue container (7) and that enables the coffee falling on the valve (8) to be transferred to the residue container (7). The channel (9) is positioned in the body (2) so as to extend towards the residue container (7), starting from the end portion of the valve (8). The coffee falling on the valve (8) flows into the channel (9) and is discharged to the residue container (7) by moving along the channel (9).

In another embodiment of the present invention, when the brewing chamber (4) is placed in the compartment (5), the valve (8) leaves the alignment with the capsule housing (3) by being pushed by the brewing chamber (4), and enables the falling coffee in case the capsule (K) is opened/blown to flow into the brewing chamber (4). The brewing chamber (4) contacts the valve (8) when placed in the compartment (5), and the brewing chamber (4) moves the valve (8) and enables the valve (8) to leave the alignment with the capsule housing (3). Thus, the coffee machine (1) becomes operational and suitable for brewing coffee by placing the capsule (K) to the capsule housing (3).

In another embodiment of the present invention, the valve (8) is positioned in the compartment (5) so as to stay behind the brewing chamber (4). The valve (8) stays behind the brewing chamber (4) in the direction of the taking the brewing chamber (4) out of the compartment (5). By means of this embodiment, the operating of the valve (8) is realized by a simpler mechanical structure, and the perception of quality of the user is improved by preventing the user from seeing the valve (8).

In another embodiment of the present invention, the valve (8) becomes almost parallel with the rear wall of the compartment (5) when the brewing chamber (4) is placed into the compartment (5). The valve (8) comes to a perpendicular position by means of the contact of the brewing chamber (4) and becomes almost coplanar with the rear wall of the compartment (5).

In another embodiment of the present invention, the coffee machine (1) comprises a pivot pin (10) that houses the valve (8) so that the valve (8) can rotate around the horizontal axis. When the brewing chamber (4) is taken out of the compartment (5) or placed in the compartment (5), the valve (8) aligns and leaves the alignment with the capsule housing (3) by rotating around the pivot pin (10) by means of the contact of the brewing chamber (4).

In another embodiment of the present invention, when the brewing chamber (4) is taken out of the compartment (5), the valve (8) aligns with the capsule housing (3) by means of the effect of its own weight. In this embodiment, the valve (8) that prevents the coffee falling from the capsule (K) from falling on the heater (6) has a simple structure and aligns with the capsule housing (3) by rotating around the pivot pin (10) by means of the effect of its own weight when the contact of the brewing chamber (4) is cut off. When the brewing chamber (4) is placed in the compartment (5), the valve (8) rotates around the pivot pin (10) in the opposite direction and come into the position that is parallel with the rear wall of the compartment (5).

In another embodiment of the present invention, the coffee machine (1) comprises a movement mechanism (11) that enables the valve (8) to rotate around the pivot pin (10) when the brewing chamber (4) is taken out of the compartment (5). In this embodiment, the movement of the valve (8), in other words the alignment thereof with the capsule housing (3) when the brewing chamber (4) is out of the compartment (5), is provided by means of the movement mechanism (11).

In another embodiment of the present invention, the movement mechanism (11) comprises a spring (12) that is connected to the pivot pin (10) and that constantly forces the valve (8) to rotate so as to align with the capsule housing (3). When the brewing chamber (4) bears against the valve (8) by being placed in the compartment (5), the spring (12) stretches/is compressed. When the brewing chamber (4) is taken out of the compartment (5), the spring (12) rotates the valve (8) around the pivot pin (10) with the energy stored thereon so as to be aligned with the capsule housing (3).

In another embodiment of the present invention, the inside of the channel (9) is coated with a material that prevents the coffee falling thereon from holding onto the channel (9). Thus, almost all the coffee that falls from the capsule (K) is enabled to be transferred to the residue container (7). By keeping the inside of the channel (9) clean, formation of bad odors is prevented and moreover the need for the user to clean inside the channel (9) is eliminated.

In another embodiment of the present invention, the inside of the channel (9) is coated with polytetrafluoroethylene. In this embodiment, the inside of the channel (9) is coated with polytetrafluoroethylene, that is widely known in the state of the art with the ability to decrease friction.

In another embodiment of the present invention, the coffee machine (1) is suitable to brew Turkish coffee. The coffee is brewed in the brewing chamber (4) and is transferred into the cup.

In the coffee machine (1) of the present invention, by means of the valve (8) aligning with the capsule housing (3) and directing the coffee falling from the capsule housing (3) to the residue container (7) when the brewing chamber (4) is not in the compartment (5), the coffee in the capsule (K) is prevented from being discharged and falling on the heater (6) when the brewing chamber (4) is not in place. The valve (8), which leaves the alignment of the capsule housing (3) as the brewing chamber (4) is restored to its place, enables the coffee falling from the capsule (K) to flow into the brewing chamber (4) and enables brewing coffee in a safe manner.

## Claims

1. A coffee machine (1), **comprising** a body (2); a capsule housing (3) wherein the preferably single use capsule (K) is placed and that is disposed at the upper portion of the body (2); a brewing chamber (4) wherein the brewing process is performed by the coffee transferred from the capsule (K) and the water being added, that is disposed in the body (2) so as to stay under the capsule housing (3) and that can be taken out of the body (2); a compartment (5) wherein the brewing chamber (4) is placed and that is disposed in the body (2); **characterized by** a heater (6) that enables the brewing chamber (4) to be heated, a residue container (7) wherein the liquid that drips from the brewing chamber (4) is accumulated; and a valve (8) that is disposed in the body (2), that aligns with the capsule housing (3) by moving when the brewing chamber (4) is taken out of the compartment (5) and that when the brewing chamber is taken out of the compartment enables the coffee falling in case the capsule (K) is opened or blown to be guided towards the residue container (7).

2. A coffee machine (1) as in Claim 1, **characterized by** a channel (9) that is disposed between the valve (8) and the residue container (7) and that enables the coffee falling on the valve (8) to be transferred to the residue container (7).

3. A coffee machine (1) as in Claim 1 or 2, **characterized by** the valve (8) that leaves the alignment with the capsule housing (3) by being pushed by the brewing chamber (4) when the brewing chamber (4) is placed in the compartment (5) and that allows the falling coffee in case the capsule (K) is opened/blown to flow into the brewing chamber (4).

4. A coffee machine (1) as in any one of the above claims, **characterized by** the valve (8) that is positioned in the compartment (5) so as to stay behind the brewing chamber (4).

5. A coffee machine (1) as in Claim 4, **characterized by** the valve (8) that becomes almost parallel with the rear wall of the compartment (5) when the brewing chamber (4) is placed into the compartment (5).

6. A coffee machine (1) as in any one of the above claims, **characterized by** a pivot pin (10) that houses the valve (8) so that the valve (8) can rotate around the horizontal axis.

7. A coffee machine (1) as in Claim 6, **characterized by** the valve (8) that aligns with the capsule housing (3) by means of the effect of its own weight when the brewing chamber (4) is taken out of the compartment (5).

8. A coffee machine (1) as in Claim 6, **characterized by** a movement mechanism (11) that enables the valve (8) to rotate around the pivot pin (10) when the brewing chamber (4) is taken out of the compartment (5).

9. A coffee machine (1) as in Claim 8, **characterized by** the movement mechanism (11) that comprises a spring (12) that is connected to the pivot pin (10) and that constantly forces the valve (8) to rotate towards the alignment of the capsule housing (3).

10. A coffee machine (1) as in Claim 2, **characterized by** the channel (9) the inside of which is coated with a material that prevents the coffee falling thereon from holding onto the channel (9).

11. A coffee machine (1) as in Claim 2, **characterized by** the channel (9) the inside of which is coated with polytetrafluoroethylene.

## Patentansprüche

1. Eine Kaffeemaschine (1) umfasst einen Körper (2), ein Kapselgehäuse (3), worin vorzüglich Einwegkapseln (K) angeordnet sind und sich an dem oberen Abschnitt des Körpers (2) befinden, eine Brühkammer (4), der in dem Körper (2) angeordnet ist, um unter dem Kapselgehäuse (3) zu bleiben und aus dem Körper herausgenommen werden (2); und in dessen der Brühvorgang durchgeführt wird, durch den von der Kapsel (K) übertragenen Kaffee und das hinzugefügte Wasser; ein Fach (5), das in dem Körper (2) angeordnet ist und in dessen die Brühkammer (4) sich befindet; **gekennzeichnet wird es durch,** eine Heizanlage (6), die das Erwärmen der Brühkammer (4) ermöglicht und einen Restebehälter (7), worin sich die aus der Brühkammer (4) tropfende Flüssigkeit ansammelt; ein Ventil (8), das in dem Körper (2) angeordnet ist und sich mit dem Kapselgehäuse (3) ausrichtet, indem es bewegt wird, wenn die Brühkammer (4) aus dem Fach (5) herausgenommen wird; und wenn die Brühkammer (4) aus dem Fach (5) herausgenommen wird, kann der Kaffee fallen, im Falle, dass die Kapsel (K) geöffnet oder geblasen wird, um in Richtung des Restbehälter (7) geführt zu werden.

2. Eine Kaffeemaschine (1), wie in Anspruch 1 aufgeführt, **ist dadurch gekennzeichnet, dass** ein Kanal (9), der zwischen dem Ventil (8) und dem Restebehälter (7) angeordnet ist und die Übergabe des auf das Ventil (8) fallende Kaffee in den Restebehälter (7) ermöglicht.

3. Eine Kaffeemaschine (1), wie in Anspruch 1 oder 2 aufgeführt, **ist dadurch gekennzeichnet, dass** das Ventil (8) die Ausrichtung mit dem Kapselgehäuse (3) verlässt, indem es von der Brühkammer (4) gedrückt wird, wenn die Brühkammer (4) platziert in dem Fach (5) ist; dies ermöglicht es dem fallenden Kaffee, falls die Kapsel (K) geöffnet / geblasen wird, in die Brühkammer (4) zu fließen.

4. Eine Kaffeemaschine (1), wie in einem der vorherigen Ansprüchen aufgeführt, **ist dadurch gekennzeichnet, dass** das Ventil (8) so innerhalb des Fachs (5) angeordnet ist, dass es hinter der Brühkammer (4) bleibt.

5. Eine Kaffeemaschine (1), wie in Anspruch 4 aufgeführt, **ist dadurch gekennzeichnet, dass** das Ventil (8) fasst parallel zu der Rückwand des Fachs (5) stehen wird, wenn die Brühkammer (4) in das Fach (5) platziert wird.

6. Eine Kaffeemaschine (1), wie in einem der vorherigen Ansprüchen aufgeführt, **ist dadurch gekennzeichnet, dass** ein Schwenkstift (10) das Ventil (8) so aufnimmt, dass sich das Ventil (8) um die horizontale Achse drehen kann.

7. Eine Kaffeemaschine (1), wie in Anspruch 6 aufgeführt, **ist dadurch gekennzeichnet, dass** das Ventil (8) aufgrund der Wirkung seines eigenen Gewichts auf das Kapselgehäuse (3) ausgerichtet ist, wenn die Brühkammer (4) aus dem Fach (5) entnommen wird.

8. Eine Kaffeemaschine (1), wie in Anspruch 6 aufgeführt, **ist dadurch gekennzeichnet, dass** durch einen Bewegungsmechanismus (11), der es dem Ventil (8) ermöglicht, falls die Brühkammer (4) aus dem Fach (5) herausgenommen wird, sich um den Schwenkstift (10) zu drehen,

9. Eine Kaffeemaschine (1), wie in Anspruch 8 aufgeführt, **ist dadurch gekennzeichnet, dass** der Bewegungsmechanismus (11) eine Feder (12) umfasst, die mit dem Schwenkstift (10) verbunden ist und das Ventil (8) ständig dazu zwingt, sich in Richtung der Ausrichtung des Kapselgehäuses (3) zu drehen.

10. Eine Kaffeemaschine (1), wie in Anspruch 2 aufgeführt, **ist dadurch gekennzeichnet, dass** das innere des Kanals (9) mit einem Material beschichtet ist, das es verhindert, dass der auf ihn fallende Kaffee den Kanal (9) hält.

11. Eine Kaffeemaschine (1), wie in Anspruch 2 aufgeführt, **ist dadurch gekennzeichnet, dass** das innere des Kanals (9) mit Polytetrafluorethylen beschichtet ist.

## Revendications

1. Une machine à café (1), **comprenant** un corps (2) ; un logement de capsule (3) dans lequel la capsule à usage unique (K) de préférence est placée et qui est disposée sur la partie supérieure du corps (2) ; une chambre de percolation (4) dans laquelle le processus de percolation est effectué par le café transféré de la capsule (K) et l'eau étant ajoutée, qui est disposée dans le corps (2) de manière à rester sous le logement de capsule (3) et peut être retirée du corps (2), un compartiment (5) où est placée la chambre de percolation (4) et qui est disposée dans le corps (2) ; **est caractérisé par** un dispositif de chauffage (6) qui permet de chauffer la chambre de percolation (4), un réceptacle à résidus (7) dans lequel le liquide qui s'écoule de la chambre de percolation (4) est accumulé ; et une soupape (8) disposée dans le corps (2), qui s'aligne avec le logement de capsule (3) en se déplaçant lorsque la chambre de percolation (4) est sortie du compartiment (5) et qui permet au café qui tombe lorsque la capsule (K) est ouverte ou soufflée, de se guider vers le récipient à résidus (7).

2. Une machine à café (1) selon la déclaration 1, **est caractérisée en ce qu'**elle comporte un canal (9) disposé entre la soupape (8) et le réceptacle à résidus (7) qui permet le transfert du café tombé sur la soupape (8) dans le réceptacle à résidus (7).

3. Une machine à café (1) comme dans la déclaration 1 ou 2, **est caractérisée en ce que** la soupape (8) quitte l'alignement avec le logement de capsule (3) en étant poussée par la chambre de percolation (4) lorsque la chambre de percolation (4) est placée dans le compartiment (5) et permet au café en chute dans l'hypothèse où la capsule (K) s'ouvre ou est soufflé, de passer dans la chambre de percolation (4).

4. Une machine à café (1) comme dans l'une quelconque des déclarations ci-dessus, **est caractérisée par** la soupape (8) qui est positionnée dans le compartiment (5) de manière à rester derrière la chambre de percolation (4).

5. Une machine à café (1) comme dans la déclaration 4, **est caractérisée par** la soupape (8) qui devient presque parallèle à la paroi arrière du compartiment (5) lorsque la chambre de percolation (4) est placée à l'intérieur du compartiment (5).

6. Une machine à café (1) comme dans l'une quelconque des déclarations ci-dessus, **est caractérisée par** un axe de pivotement (10) qui loge la soupape (8) de sorte que la soupape (8) puisse tourner autour de l'axe horizontal.

7. Une machine à café (1) selon la déclaration 6, **est caractérisée par** la soupape (8) qui s'aligne avec le logement de capsule (3) par effet de son propre poids lorsque la chambre de percolation (4) est sortie du compartiment (5).

8. Une machine à café (1) comme dans la déclaration 6, **est caractérisée par** un mécanisme de mouvement (11) qui permet à la soupape (8) de tourner autour du pivot (10) lorsque la chambre de percolation (4) est sortie du compartiment (5).

9. Une machine à café (1) selon la déclaration 8, **est caractérisée par** le mécanisme de mouvement (11) qui comprend un ressort (12) relié à l'axe de pivotement (10) et qui force constamment la soupape (8) à tourner vers le logement de capsule (3).

10. Une machine à café (1) selon la déclaration 2, **est caractérisée par** le canal (9) dont l'intérieur est revêtu d'un matériau qui empêche le café de tomber sur le canal (9).

11. Une machine à café (1) comme dans la déclaration 2, **est caractérisée par** le canal (9) dont l'intérieur est revêtu de polytétrafluoroéthylène.
